## Europäisches Patentamt
## European Patent Office
## Office européen des brevets

(19)

(11) Veröffentlichungsnummer: **0 052 667**
**B1**

(12)

# EUROPÄISCHE PATENTSCHRIFT

(45) Veröffentlichungstag der Patentschrift:
13.02.85

(21) Anmeldenummer: **80107313.1**

(22) Anmeldetag: **24.11.80**

(51) Int. Cl.⁴: **F 24 H 7/02,** F 24 J 3/00, F 24 D 17/00

(54) **Warmwasser-Versorgungssystem.**

(43) Veröffentlichungstag der Anmeldung:
02.06.82 Patentblatt 82/22

(45) Bekanntmachung des Hinweises auf die Patenterteilung:
13.02.85 Patentblatt 85/7

(84) Benannte Vertragsstaaten:
AT BE CH DE FR GB IT LI LU NL SE

(56) Entgegenhaltungen:
DD - A - 63 869
DE - A - 2 343 525
DE - A - 2 919 809
GB - A - 2 035 764
US - A - 4 219 072

Patents Abstracts of Japan Band 4, Nr. 84, 17. Juni 1980
Seite 117M16

(73) Patentinhaber: **Schmidt Reuter Ingenieurgesellschaft mbH & Co. KG, Graeffstrasse 5, D-5000 Köln 30 (DE)**

(72) Erfinder: **Radtke, Wolfgang, Ing. grad., Nachtigallenweg 46, D-5063 Overath (DE)**
Erfinder: **Borbely, György, Dipl.-Ing., Jahnstrasse 39, D-4000 Düsseldorf (DE)**

(74) Vertreter: **Selting, Günther, Dipl.-Ing. et al, Deichmannhaus am Hauptbahnhof, D-5000 Köln 1 (DE)**

## Beschreibung

Die Erfindung betrifft ein Warmwasser-Versorgungssystem, mit einer Heizvorrichtung und mindestens einem entfernt von der Heizvorrichtung angeordneten und über eine einzige Warmwasserleitung mit der Heizvorrichtung verbundenen Verbraucher.

Bekannt sind Warmwasser-Versorgungssysteme, bei denen warmes Brauchwasser in einem Warmwasserbehälter an der zentralen Heizvorrichtung bereitgehalten wird. Bei der Warmwasserentnahme am Verbraucher fließt zunächst das in der Warmwasserleitung enthaltene Wasser, das sich im Laufe der Zeit abgekühlt hat, aus, bis von der Heizvorrichtung kommendes warmes Wasser nachströmt. Eine Warmwasserentnahme am Verbraucher ist daher nicht jederzeit möglich, sondern es ist erst erforderlich das kältere Wasser aus der Warmwasserleitung herauslaufen zu lassen. Dabei entsteht durch das Nachfüllen von kaltem Wasser in den Warmwasserbehälter ein unnötiger Energieverlust.

Um am Verbraucher jederzeit warmes Wasser verfügbar zu haben, ist es bekannt, ein Umlaufsystem vorzusehen, das in der Nähe der einzelnen Verbraucher entlangführt und in dem ständig warmes Wasser umgewälzt wird. An ein solches Umlaufsystem ist der Verbraucher mit einer Stichleitung angeschlossen. Da unabhängig davon, ob warmes Wasser am Verbraucher abgenommen wird oder nicht, ständig Warmwasser in dem Umlaufsystem zirkuliert, entstehen hohe Wärmeverluste im Umlaufsystem.

Ferner ist es bekannt, elektrisch betriebene Durchlauferhitzer direkt an den Verbrauchern anzubringen. Diese Durchlauferhitzer erfordern eine zusätzliche elektrische Leitung zum Verbraucher, wobei wegen der kurzzeitigen hohen Energieinanspruchnahme sehr leistungsfähige Versorgungsnetze nötig sind. Auch sind die Energiekosten bei Erwärmung durch Strom höher als bei Erwärmung durch Öl- oder Gasfeuerung oder Wärmepumpe — ohne Verteilverluste —, die bei zentraler Erwärmung üblicherweise gewählt wird.

Bekannt sind ferner Heizvorrichtungen mit integriertem Wärmespeicher (DD-A-63 869, GB-A-2 035 764), die den Zweck haben, die Stromaufnahme eines elektrischen Durchlauferhitzers zu verringern. Zu diesem Zweck ist im Durchlauferhitzer ein Wärmespeicher angeordnet, der durch einen relativ geringen Strom aufgeheizt wird, wenn kein Wasser entnommen wird. Der Zweck des Wärmespeichers besteht darin, durch Wärmespeicherung auf längerer Zeit bei niedriger Stromaufnahme das Stromnetz zu entlasten. Es handelt sich nicht um eine Versorgungsanlage, bei der die Heizvorrichtung entfernt vom Verbraucher angeordnet ist, sondern um eine unmittelbar am Verbraucher angeordnete Heizvorrichtung mit integriertem Wärmespeicher.

Schließlich ist eine Wärmespeichervorrichtung bekannt (DE-A-2 343 525), bei der ein Wärmespeichermittel mit hohem Enthalpiegehalt in Kapseln enthalten ist, die in einem Brauchwasserspeicher vorhanden und von dem Brauchwasser umspült sind. Auch hierbei handelt es sich um die Kombination eines elektrischen Widerstandsheizgerätes mit einem Wärmespeicher zum Zwecke der Reduzierung der maximalen Stromaufnahme bzw. der Erhöhung der Heizkapazität.

Der Erfindung liegt die Aufgabe zugrunde, ein Warmwasser-Versorgungssystem der eingangs genannten Art zu schaffen, bei dem unter Vermeidung eines geschlossenen Umlaufsystems und der damit verbundenen Wärmeverluste eine Warmwasserentnahme am Verbraucher jederzeit, auch in kleinen Mengen, möglich ist.

Zur Lösung dieser Aufgabe ist erfindungsgemäß in die Warmwasserleitung ein in der Nähe des Verbrauchers angeordneter Wärmespeicher geschaltet.

Bei einer längeren Warmwasserentnahme am Verbraucher wird der Wärmespeicher aufgeladen. Wird die Warmwasserentnahme beendet, dann kühlt sich das in der Warmwasserleitung stehende Wasser langsam ab, während die Entladung des kompakten Wärmespeichers sehr viel langsamer erfolgt. Wird dann am Verbraucher von neuem Wasser entnommen, wird das aus der Warmwasserleitung kommende (abgekühlte) Wasser zunächst dem Wärmespeicher zugeführt, um von diesem Wärme aufzunehmen. Am Verbraucher fließt also sofort warmes Wasser aus. Die in dem Wärmespeicher gespeicherte Wärmemenge sollte etwa ausreichen, um die in der Leitung stehende Wassermenge, die sich abgekühlt hat, von neuem zu erwärmen. Wenn diese Wassermenge ausgeflossen ist, folgt das von der Heizvorrichtung erwärmte Wasser nach, so daß der Wärmespeicher dazu dient, das in der Leitung stehende Wasser beim Auslaufen zu erwärmen, bis das Wasser der Heizvorrichtung am Verbraucher angelangt ist. Während des Fließens des heißen Wassers wird der Wärmespeicher wieder aufgeladen, d. h. erwärmt.

Vorzugsweise ist der Wärmespeicher ein Latentwärmespeicher, der in einer Flüssigkeit ein schmelzbares Salz enthält. Wenn bei einem derartigen Speicher die Temperatur über den Schmelzpunkt des Salzes ansteigt, schmilzt das Salz. Fällt die Temperatur anschließend wieder ab, wird die Schmelztemperatur so lange aufrechterhalten bis die gesamte Salzmenge erstarrt ist. Auf diese Weise wird ein bestimmtes Temperaturniveau über eine längere Zeit hinweg aufrechterhalten. Es können jedoch auch Parafin oder andere ihren Aggregatzustand zwischen 30° C und 70° C ändernde Substanzen verwendet werden.

Das Salz und die Flüssigkeit sind vorzugsweise in Kapseln enthalten, die in einem in die Warmwasserleitung geschalteten Behälter enthalten sind. Das Brauchwasser, das durch den Behälter hindurchfließt, kommt lediglich mit den Außenwänden der Kapseln in Berührung, durch die hindurch der Wärmeaustausch stattfindet.

Bei einer alternativen Ausführungsform besteht der Wärmespeicher aus einem Behälter, durch den eine in die Warmwasserleitung geschaltete Rohrschlange hindurchführt und der ein Wärmespeichermedium enthält. Dieses Wärmespeichermedium kann ebenfalls aus einem Salz, in gekapselter oder ungekapselter Form, bestehen. Das Brauchwasser fließt durch die Rohrschlange hindurch und gibt dabei Wärme an das Wärmespeichermedium ab bzw. nimmt Wärme von dem Wärmespeichermedium auf.

Im folgenden wird unter Bezugnahme auf die Zeichnungen ein Ausführungsbeispiel der Erfindung näher erläutert.

Es zeigt

Figur 1 eine schematische Darstellung des Warmwasser-Versorgungssystems und

Figur 2 einen schematischen Längsschnitt durch einen Wärmespeicher.

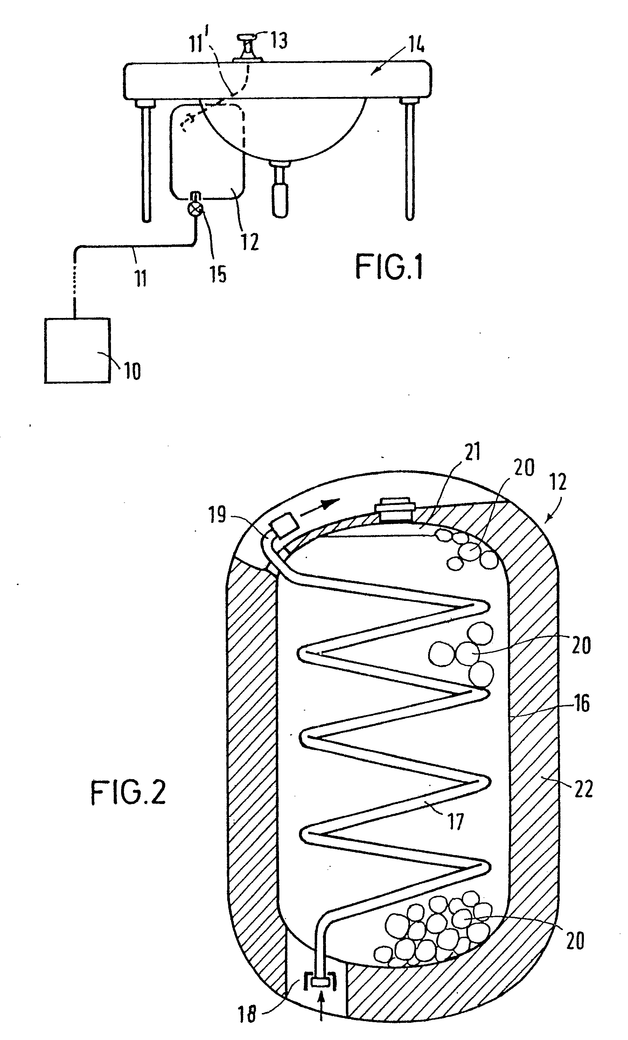

Gemäß Figur 1 ist ein zentraler Warmwasserbereiter 10, z. B. der Brauchwasserkessel einer Heizungsanlage, über eine Warmwasserleitung 11 und einen Wärmespeicher 12 an einen Warmwasserverbraucher 13 angeschlossen, bei dem es sich im vorliegenden Fall um den Warmwasserhahn eines Waschtisches 14 handelt. Der Wärmespeicher 12 ist ein unterhalb des Waschtisches 14 angeordnetes Gerät, dessen Eingang über einen Absperrhahn 15 mit der Warmwasserleitung 11 und dessen Ausgang über eine Leitung 11' mit dem Wasserverbraucher 13 verbunden ist.

Der Wärmespeicher 12 ist in Figur 2 im Längsschnitt dargestellt. In einem Behälter 16 befindet sich eine Rohrschlange 17, deren beide Enden 18 und 19 abdichtend aus dem Behälter 16 herausgeführt und mit Anschlußstücken zum Anschrauben der Leitungen 11 bzw. 11' versehen sind. Im Innern des Behälters 16 befindet sich eine Flüssigkeit, in der Latentspeicherkugeln 20 enthalten sind, die ein schmelzbares Salz enthalten. Über der Flüssigkeit befindet sich ein kleiner Luftraum 21 für den Druckausgleich. Obwohl in der Zeichnung nur wenige Latentspeicherkugeln 20 dargestellt sind, ist der gesamte Innenraum des Behälters 16 im wesentlichen mit derartigen Kugeln ausgefüllt, um eine hohe Speicherkapazität zu erhalten.

Die Rohrschlange 17 besteht aus einem Metall hoher Wärmeleitfähigkeit und der Behälter 16 ist außen mit einer wärmeisolierenden Schicht 22 bedeckt.

Wird an dem Verbraucher 13 über längere Zeit Wasser entnommen, dann steht sowohl in der Warmwasserleitung 11 als auch in der Rohrschlange 17 warmes Wasser. Hierdurch wird der Wärmespeicher aufgeladen. Das Wasser in der Warmwasserleitung 11 kühlt sich langsam ab. Wird nach längerer Zeit am Verbraucher 13 von neuem Wasser entnommen, fließt zunächst das in der Rohrschlange 17 enthaltene warme Wasser aus, wodurch Wasser aus der Leitung 11 in die Rohrschlange 17 nachströmt und dort ebenfalls erwärmt wird. Auf diese Weise steht am Verbraucher 13 sofort warmes Wasser zur Verfügung.

## Patentansprüche

1. Warmwasser-Versorgungssystem, mit einer Heizvorrichtung (10) und mindestens einem entfernt von der Heizvorrichtung angeordneten und über eine einzige Warmwasserleitung (11) mit der Heizvorrichtung (10) verbundenen Verbraucher (13), dadurch gekennzeichnet, daß in die Warmwasserleitung (11) ein in der Nähe des Verbrauchers (13) angeordneter Wärmespeicher (12) geschaltet ist.

2. Warmwasser-Versorgungssystem nach Anspruch 1, dadurch gekennzeichnet, daß der Wärmespeicher (12) ein Latentwärmespeicher ist, der eine zwischen 30°C und 70°C ihren Aggregatzustand ändernde Substanz enthält.

3. Warmwasser-Versorgungssystem nach Anspruch 2, dadurch gekennzeichnet, daß die ihren Aggregatzustand ändernde Substanz in Kapseln enthalten sind, die in einem in die Warmwasserleitung geschalteten Behälter enthalten sind.

4. Warmwasser-Versorgungssystem nach Anspruch 1 oder 2, dadurch gekennzeichnet, daß der Wärmespeicher (12) aus einem Behälter (16) besteht, durch den eine in die Warmwasserleitung (11) geschaltete Rohrschlange (17) hindurchführt und der ein Wärmespeichermedium enthält.

## Claims

1. Hot-water-supply system comprising a heating means (10) and at least one consuming device (13) mounted remotely from the heating means and being connected to the heating means (10) through one single hot-water conduit (11), characterized in that a heat accumulator (12) provided near the consuming device (13) is connected in the hot-water conduit (11).

2. Hot-water-supply system according to claim 1, characterized in that the heat accumulator (12) is a latent heat accumulator containing a substance that changes its state of aggregation between 30°C and 70°C.

3. Hot-water-supply system according to claim 2, characterized in that the substance changing its state of aggregation is contained in capsules which are present in a container connected in the hot-water conduit.

4. Hot-water-supply system according to claim 1 or 3, characterized in that the heat accumulator (12) consists of a tank (16) which is traversed by a pipe coil (17) connected in the water conduit (11) and which contains a heat storing medium.

## Revendications

1. Système d'alimentation en eau chaude, comportant un dispositif de chauffage (10) et au moins un appareil d'utilisation (13) disposé de façon éloignée du dispositif de chauffage, et relié audit dispositif de chauffage (10) par l'intermédiaire d'une conduite d'eau chaude (11) unique, caractérisé par le fait que, sur la conduite d'eau chaude (11) est branché un accumulateur de chaleur (12) disposé au voisinage de l'appareil d'utilisation (13).

2. Système d'alimentation en eau chaude selon la revendication 1, caractérisé par le fait que l'accumulateur de chaleur (12) est un accumulateur à chaleur latente qui contient une substance changeant d'état physique entre 30°C et 70°C.

3. Système d'alimentation en eau chaude selon la revendication 2, caractérisé par le fait que la substance changeant d'état physique est renfermée dans des capsules qui sont contenues dans un récipient branché sur la conduite d'eau chaude.

4. Système d'alimentation en eau chaude, selon la revendication 1 ou 2, caractérisé par le fait que l'accumulateur de chaleur (12) est constitué par un réservoir (16) traversé par un serpentin tubulaire (17) branché sur la conduite d'eau chaude (11) et qui contient un milieu accumulateur de chaleur.

FIG.1

FIG.2